# EUROPÄISCHE PATENTSCHRIFT

(11) **EP 2 965 877 B1**
(45) Veröffentlichungstag und Bekanntmachung des Hinweises auf die Patenterteilung: **20.08.2025**
(21) Anmeldenummer: 15001970.1
(22) Anmeldetag: 02.07.2015
(51) Int. Cl.: B25J 15/02, F16D 3/10, F16D 43/26

(54) **VERFAHREN UND ANTRIEB FÜR EINE VORRICHTUNG ZUM BESCHLEUNIGEN EINES AUF BLOCK FAHRENDEN GETRIEBEZUGES**
METHOD AND DRIVE FOR A DEVICE FOR ACCELERATING A GEAR TRAIN DRIVING ON A BLOCK
PROCEDE ET ENTRAINEMENT POUR UN DISPOSITIF D'ACCELERATION D'UN TRAIN D'ENGRENAGES ROULANT SUR BLOC

(30) Priorität: 08.07.2014 DE 102014010014
(43) Veröffentlichungstag der Anmeldung: 13.01.2016
(73) Patentinhaber: Zimmer, Günther, 77866 Rheinau (DE); Zimmer, Martin, 77866 Rheinau (DE)
(72) Erfinder: Zimmer, Günther, 77866 Rheinau (DE); Zimmer, Martin, 77866 Rheinau (DE)
(74) Vertreter: Thämer, Wolfgang

(56) Entgegenhaltungen:
- DE-A1- 1 463 076
- DE-A1- 10 114 471
- JP-A- 2005 161 454
- US-A- 3 559 751
- US-A- 4 674 781
- US-A- 4 889 002
- US-A- 5 280 981
- US-A- 5 319 991

## Beschreibung

Die Erfindung betrifft ein Verfahren und ein Antrieb für eine Vorrichtung zum Beschleunigen eines auf Block fahrenden Getriebezuges einer Brems-, Klemm- oder Greifvorrichtung. Die das Verfahren realisierende Vorrichtung hat einen Antrieb, der in einem Gehäuse mindestens einen Elektromotor und mindestens zwei Getriebe lagert, wobei der Elektromotor ein Abtriebsglied hat, das über die Getriebe auf einen Hubschlitten wirkt.

Aus der DE 10 2013 020 490 ist eine Antriebsvorrichtung für eine Greifvorrichtung bekannt, bei der in einem Gehäuse mindestens ein Elektromotor und mehrere Getriebe angeordnet sind, wobei der Abtrieb auf einen die Greifelemente anlenkenden Hubschlitten wirkt. Zwischen zwei der Getriebe ist mindestens ein federelastisches Bauteil angeordnet.

Die US 4 889 002 A offenbart einen Linearantrieb, bei dem ein Elektromotor über ein mehrstufiges Zahnradgetriebe eine Teleskopstange mithilfe eines Schraubgetriebes bzw. eines Spindel/Mutter-Triebs aus- und einfährt. Das Zahnradgetriebe umfasst eine Nebenwelle, deren zwei Zahnräder so miteinander gekoppelt sind, dass sich zwischen ihnen ein Winkelspiel einstellt. Das eine Zahnrad greift mittels Bolzen in bogenförmige Langlöcher des anderen Zahnrads ein.

Aus der US 5 319 001 A ist eine Motorkupplung eines Kassettenwechslers mit Winkelnachgiebigkeit bekannt. Der Kassettenwechsler hat ein Ausziehhaken, der zwischen zwei Anschlägen zum Einhaken und Aushaken der zu wechselnden Kassette hin und her bewegt wird, vgl. US 5 184 260. Sobald der Ausziehhaken gegen einen der Anschläge fährt, wird der Antriebsmotor mittels eine Strombegrenzungsschaltung abgeschaltet. Zur Bildung einer Motorkupplung haben die Wellenenden des Motors und des Getriebes jeweils Mitnehmer mit dem Querschnitt eines Kreisausschnitts, wobei die Spitze des Kreisausschnitts auf der Mittellinie der Motor- und Getriebewelle liegt. Beide Kreisabschnitte haben einen Zentriwinkel von jeweils 90 Winkelgraden. Bei jedem Kuppeln kontaktieren sich die einander gegenüberliegenden Flanken der beiden Mitnehmer.

Die US 3,559,751 A offenbart eine motorisch angetriebene Hammervorrichtung mit einem Schubkurbelantrieb. In einer Außenhülse sitzt beabstandet eine Innenhülse. In der Innenhülse ist verschiebbar ein an seinen beiden Stirnseiten verschlossener Zylinder gelagert. In dem Zylinder sitzt ein fliegender, luftgepolsteter Kolben mit einer aus dem Zylinder herausragenden Stange. Beim Betätigen des Schubkurbelantriebs kann motordrehzahlabhängig die Massenträgheit und die Schwerkraft des Kolbens zu einem Schlagen führen.

Die US 4,674,781 A offenbart eine Vorrichtung zum manuellen und elektrischen Verriegeln und Entriegeln von Fahrzeugtüren. Bei einem manuellen Öffnen und Schließen wird eine Verbindungsstange relativ zu einem Langloch einer Zahnstange verschoben, um den Motor zu entkoppeln. Nach jeder motorischen Betätigung wird die Zahnstange in eine neutrale Position zwischen den Endlagen verfahren.

Die DE 101 14 471 A1 beschreibt eine elektromechanisch betätigbare Bremse eines Fahrzeugs. Dabei treibt ein Elektromotor zum Einleiten einer Bremsung über eine spielbehaftete Kupplung, ein mehrstufiges Rädergetriebe und ein Schraubgetriebe eine Bremsenmechanik an. Die Eingangs- und die Ausgangsseite der Kupplung weisen für die Drehmitnahme je einen als Klaue ausgebildeten Anschlag auf. Beide Klauen werden bei nicht betätigter Bremse über ein Federelement auf maximalem Abstand zueinander gehalten.

Der vorliegenden Erfindung liegt die Problemstellung zugrunde, ein Verfahren und eine Vorrichtung zum Beschleunigen eines auf Block fahrenden Getriebezuges einer Brems-, Klemm- oder Greifvorrichtung zu entwickeln, die bei großer Brems-, Klemm- oder Greifkraft, geringem Bauraumbedarf und einer langen Lebensdauer ohne Druckluftantrieb eine hohe Dynamik bei geringem Energiebedarf aufweist.

Diese Problemstellung wird mit den Merkmalen der Patentansprüche 1 und 3 gelöst. Dazu ist bei dem Verfahren nach Patentanspruch 1 der motornahe Teil des Getriebezugs, der aus dem rotierenden Teil eines Antriebsmotors und den nachgeschalteten auf einen Hubschlitten wirkenden

Getrieben besteht, zeitlich vor dem motorfernen Teil dieses Getriebezuges beschleunigbar. Der motornahe Teil des Getriebezuges ist mit dem motorfernen Teil des Getriebezuges über eine nichtschaltbare drehspielbehaftete auf einer Scheibenkupplung basierende Wellenkupplung aus einer Antriebsscheibe und einer Abtriebsscheibe oder eine longitudinalspielbehaftete Schubkupplung verbunden. Das Drehspiel oder das Longitudinalspiel steht bei jedem Greif- und Lösevorgang vollständig zur Verfügung, um mit den schon beschleunigten Getriebeteilen die ruhenden Getriebeteile ruckartig in Bewegung zu versetzen, wobei sich bei einer drehspielbehafteten Wellenkupplung bei jedem Drehrichtungswechsel Kupplungselemente der Antriebsscheibe und Kupplungselemente der Abtriebsscheibe erst nach einem Kupplungswinkel von mindestens 10 Winkelgraden gegenseitig über ebene Flanken und kontaktieren.

Nach dem Patentanspruch 3, bei dem der Elektromotor ein Abtriebsglied hat, das über die Getriebe auf einen Hubschlitten wirkt, ist zwischen dem Abtriebsglied des Elektromotors und dem Hubschlitten mindestens eine drehspielbehaftete auf einer Scheibenkupplung basierende Wellenkupplung oder eine longitudinalspielbehaftete Schubkupplung angeordnet. Das Drehspiel oder das Longitudinalspiel steht bei jedem Greif- und Lösevorgang vollständig zur Verfügung, um mit den schon beschleunigten Getriebeteilen die ruhenden Getriebeteile ruckartig in Bewegung zu versetzen. Die Wellenkupplung besteht aus einer Antriebsscheibe und einer Abtriebsscheibe, wobei beide Scheiben Kupplungselemente haben, die sich bei jedem Drehrichtungswechsel erst nach einem Kupplungswinkel von mindestens 10 Winkelgraden gegenseitig über ebene Flanken kontaktieren.

Der für eine Vorrichtung vorgesehene Antrieb umfasst hier mindestens drei hintereinander geschaltete Getriebe. Das erste Getriebe, z.B. ein evolventenverzahntes Planeten- oder Stirnradgetriebe, wird von einem hochdynamischen bürstenlosen Gleichstrommotor angetrieben. Seine Welle treibt z.B. das erste Getriebe direkt an. Der Getriebeausgang des ersten Getriebes ist zugleich der Getriebeeingang des zweiten Getriebes, das hier ein Schraubgetriebe ist, dessen Getriebeausgang zugleich einen Hubschlitten darstellt. Nur beispielhaft sitzt zwischen diesen Getrieben eine drehspielbehaftete Kupplung, die nach jeder Drehrichtungsumkehr des im Getriebezug in Motornähe gelegenen Getriebes erst nach einem vorgegebenen Kupplungswinkel von 10 bis 350 Winkelgraden das motorferne, nachgeschaltete Getriebe, hier das Schraubgetriebe, antreibt bzw. mitnimmt.

Dem Schraubgetriebe nachgeordnet ist im Ausführungsbeispiel ein Doppelschiebekeil- bzw. Doppelkeilhakengetriebe, in dem die Hubbewegung des Hubschlittens in eine z.B. um 90 Winkelgrade gekippte Brems-, Klemm-, Greif- oder Lösebewegung umgelenkt wird. Für den Fall, dass der Keilwinkel des Doppelschiebekeilgetriebes ungleich 45 Winkelgrade ist, findet neben der Richtungsumlenkung auch eine Über- oder Untersetzung statt. Anstelle des Doppel- bzw. Mehrfachschiebekeilgetriebes können auch Hebelgetriebe, Kulissengetriebe, Exzentergetriebe und dergleichen verwendet werden. Auch Getriebekombinationen sind möglich.

Im Übrigen ist die Anzahl der Brems-, Klemm- oder Greifbacken bzw. der Schlitten nicht auf zwei beschränkt.

Mit der Erfindung wird ein Verfahren und eine dazu gehörende Vorrichtung entwickelt, mit deren Hilfe sich während des Betriebs blockierende Brems-, Klemm- oder Greifvorrichtungen selbsttätig lösen können. Dabei ist die Ursache des Festfahrens oder Blockierens der Vorrichtung zweitrangig. Das Blockieren entsteht bei Klemm- und Greifvorrichtungen z.B. durch das Fahren der entsprechenden Getriebezüge gegen deren Endanschläge. Auch das Greifen des zu großen oder falschen Werkstücks kann zu einem Festfahren der Greifbacken führen. In allen Fällen erkennt die Vorrichtung über die Wegsensoren im Getriebe und über die Sensoren der Drehzahl- und Lageüberwachung des im Antrieb verwendeten Gleichstrommotors eine Störung, auf die sie mittels einer entsprechenden Ansteuerung des Motors reagiert.

Im einfachsten Fall wird die Sensorik und die entsprechende Auswertung aufgrund der nichtschaltenden, drehspielbehafteten Kupplung oder der longitudinalspielbehafteten Schubkupplung nicht oder nur teilweise gebraucht. Bei der drehspielbehafteten Kupplung hat der anfahrende Elektromotor im Normalbetrieb unter Ausnutzung des Drehspiels der Kupplung die Möglichkeit, zunächst mit verringertem Getriebemassenträgheitsmoment und verringerter Reibung anzufahren und Schwung zu holen. Nach einem Verbrauch des Drehspiels setzt er ruckartig weitere Bauteile in Bewegung. Bei einer Greifvorrichtung ergibt sich dieser Fall immer beim Greif- und beim Lösevorgang. Schließlich ist stets bei einem Erreichen der Verfahrendpunkte der vorrichtungseigenen Greifbacken im Getriebezug das Kupplungsdrehspiel verbraucht. Somit steht es aber bei jeder Gegenbewegung sofort wieder vollständig zur Verfügung. In der Folge entsteht jedes Mal, wenn die schon beschleunigten Getriebeteile auf die noch ruhenden Getriebeteile stoßen, ein Ruck, bei dem die träge Masse der schon rotierenden Teile ihren Impuls auf die noch ruhenden Teile überträgt. Dadurch entsteht eine losreißende Wirkung an den ruhenden Teilen.

Aufwendiger wird es, wenn dieser erste Ruck nicht ausreicht, um den kompletten Getriebezug in Bewegung zu versetzen. Denn dann ist aufgrund der ersten Beschleunigung in der Kupplung das Drehspiel schon verbraucht. Hier muss nun der motornahe Teil des Getriebezugs oder auch nur der Rotor des Elektromotors allein eine Gegendrehung einleiten, um das Drehspiel wieder herzustellen. Idealerweise wird bei diesem Vorgang der Kupplungswinkel nur fast vollständig ausgenutzt. Nach dem Herstellen eines entsprechenden Kupplungsdrehspiels wird nach einer weiteren Drehrichtungsumkehr am Elektromotor, letzterer neu beschleunigt, um wieder schlaghammerartig gegen den noch blockierten Teil des Getriebezugs zu fahren. Dieser Schlagvorgang kann in schneller Folge z.B. 3- bis 15-mal wiederholt werden, sofern nicht die Sensorsignalauswertung ein Lösen der Blockierung meldet und diesen Vorgang abbricht.

Weitere Einzelheiten der Erfindung ergeben sich aus den Unteransprüchen und der nachfolgenden Beschreibung schematisch dargestellter Ausführungsformen.
- Figur 1:: Perspektivische Ansicht eines Parallelgreifers;
- Figur 2:: Teillängsschnitt durch das Doppelkeilgetriebe des Parallelgreifers nach Figur 1, jedoch mit Greifbacken. Der rechte Greifbacken ist geöffnet;
- Figur 3:: Schnitt durch den Parallelgreifer;
- Figur 4:: Querschnitt durch das Planetengetriebe des Parallelgreifers in Höhe der Planeten;
- Figur 5:: Querschnitt durch das Planetengetriebe des Parallelgreifers in Höhe der Wellenkupplung;
- Figur 6:: Teilschnitt durch den Parallelgreifer nach Figur 3;
- Figur 7:: Draufsicht auf den Parallelgreifer ohne Deckel;
- Figur 8:: Seitenansicht des Parallelgreifers, hängend;
- Figur 9:: Perspektivische Ansicht des rotornahen Getriebezugs;
- Figur 10:: Perspektivische Ansicht des Getriebezugs mit drehspielbehafteter Wellenkupplung;
- Figur 11:: Prinzipskizze einer drehspielbehafteten Wellenkupplung, Querschnitt, kleiner Drehwinkel;
- Figur 12:: Längsschnitt zu Figur 11;
- Figur 13:: Prinzipskizze einer drehspielbehafteten Wellenkupplung, Querschnitt, großer Drehwinkel;
- Figur 14:: Längsschnitt zu Figur 13;
- Figur 15:: Prinzipskizze einer longitudinalspielbehafteten Schubkupplung, Längsschnitt;
- Figur 16:: Perspektivische Ansicht der Schlitten, der Führungsabdichtungen und des Doppelkeils von oben;
- Figur 17:: Perspektivische Ansicht der Schlitten, der Führungsabdichtungen und des Doppelkeils von unten;
- Figur 18:: Teilquerschnitt durch die Führungsnutdichtung quer zur Richtung der Führungsnut, vergrößert;
- Figur 19:: Teilansicht durch die Führungsnutdichtung parallel zur Richtung der Führungsnut, vergrößert.

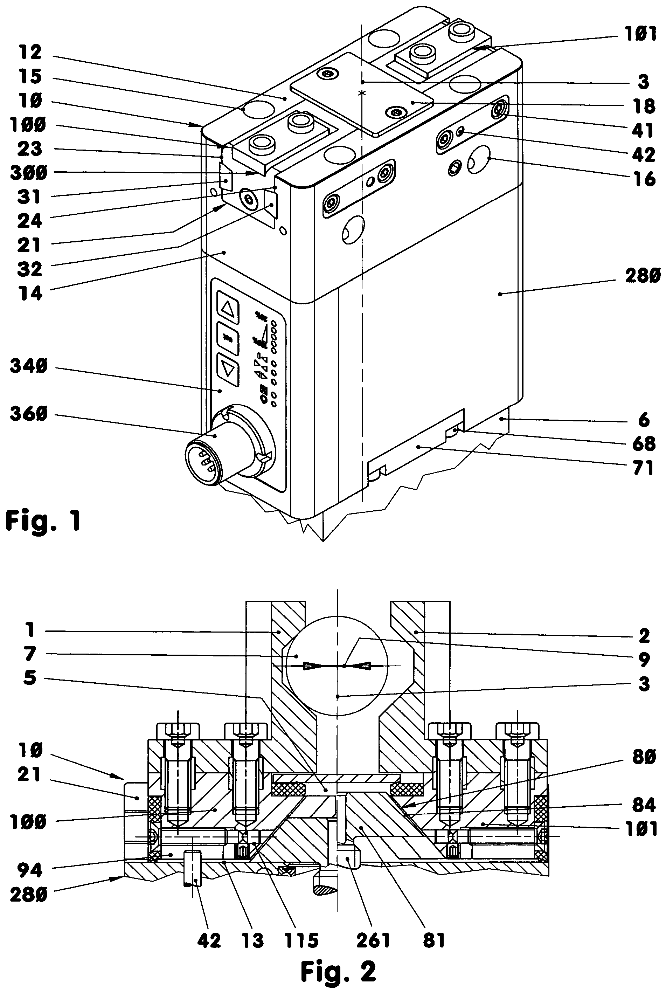

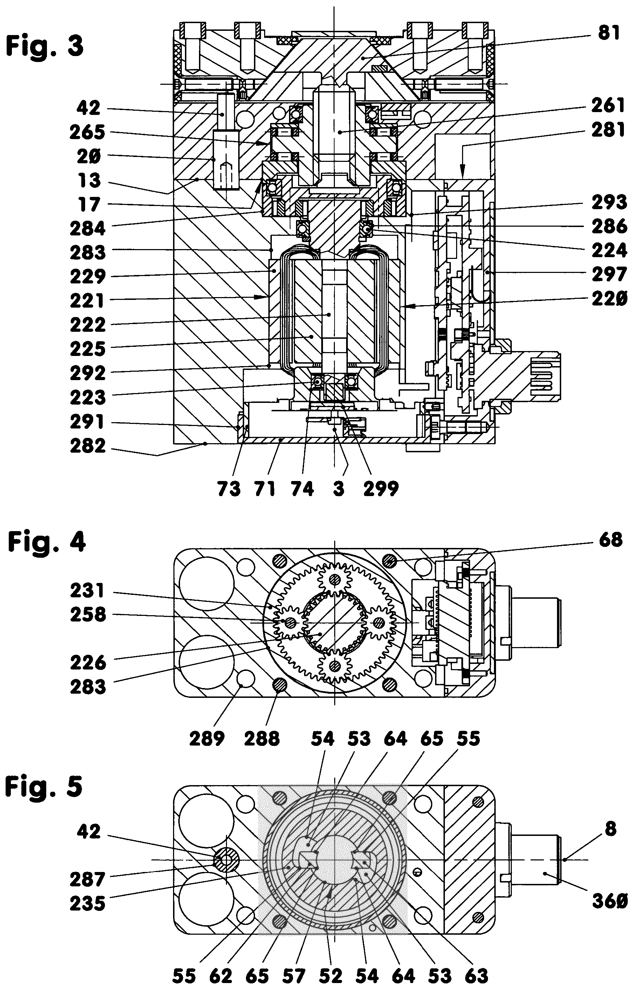

Die Figuren 1 und 2 zeigen eine Parallelgreifvorrichtung mit zwei jeweils auf Schlitten (100, 101) sitzenden Greifbacken (1, 2). Die in ihrer Längsrichtung beweglichen Schlitten (100, 101) sind in einem Führungsgrundkörper (10) in einer Führungsnut (21) z.B. gleitgelagert geführt. Der die Führungsnut aufnehmende Führungsgrundkörper (10) bildet zusammen mit einem Antriebsgrundkörper (280) ein Gehäuse, wobei der Antriebsgrundkörper (280) einen aus einem Elektromotor (221) mit z.B. zwei nachgeschalteten mechanischen Getrieben (230, 260) bestehenden Antrieb aufnimmt, vgl. Figur 3. Der Antrieb wirkt über ein Doppelschiebekeilgetriebe (80) auf die Schlitten (100, 101) des Führungsgrundkörpers (10). In Figur 1 ist die Greifvorrichtung über ihren Antriebsgrundkörper (280) auf einem sie tragenden Maschinen- bzw. Handhabungsgeräteteil (6) montiert.

Die Figur 2 stellt den oberen Teil der Parallelgreifvorrichtung im Längsschnitt mit zwei aufgeschraubten Greifbacken (1, 2) nur theoretisch dar. Die Greifbacken sollen ein z.B. zylinderförmiges Werkstück (7) greifen. Der Greifbacken (1) der linken Vorrichtungsseite liegt am Werkstück (7) an, während der Greifbacken (2) der rechten Vorrichtungsseite in geöffneter Position dargestellt ist. Im Gegensatz zur Darstellung nach Figur 2 bewegen sich die Greifbacken (1, 2) getriebebedingt immer zwangsläufig synchron aufeinander zu oder voneinander weg.

Der z.B. im Wesentlichen quaderförmige Führungsgrundkörper (10) der Parallelgreifvorrichtung ist beispielsweise aus der Aluminiumlegierung AlMgSi1 gefertigt. Die Länge des Führungsgrundkörpers (10) ist z.B. doppelt so lang wie seine Breite und seine Höhe. Im Ausführungsbeispiel misst der Führungsgrundkörper (10) in Längsrichtung - senkrecht zur Hauptmittellinie (3) - z.B. 76 mm. Bei dieser Baugröße beträgt der maximale Hub jedes Schlittens (100, 101) bzw. Greiferbackens (1, 2) z.B. 6,2 mm. Die Gesamthöhe des Gehäuses (10, 280) beträgt z.B. 100 mm.

Der Führungsgrundkörper (10) nimmt zentral die nach oben - zu den Greifelementen (1, 2) hin - offene Führungsnut (21) auf, deren z.B. rechteckiger Querschnitt eine Breite von 17,5 mm und eine Höhe von ca. 16 mm misst. In den planen Seitenwandungen (23, 24) der Führungsnut (21) ist jeweils eine Schienenführungsnut (26) zur späteren Aufnahme einer Führungsschiene (31, 32) eingearbeitet. Die Schienenführungsnuten (26) erstrecken sich über die gesamte Länge des Führungsgrundkörpers (10).

Jede Führungsschiene (31, 32) ist hier eine aus einem nichtrostenden Stahl, z.B. aus einem X90CrMoV18, gefertigte, im Wesentlichen trapezförmige Stange. Aufgrund der hohen Festigkeit einer derartigen Führungsschiene (31, 32) können die Schlitten größere Momente auf den Führungsgrundkörper (10) übertragen. Demzufolge kann die Greifvorrichtung große Greifkräfte auf das aufzunehmende Werkstück (7) ausüben.

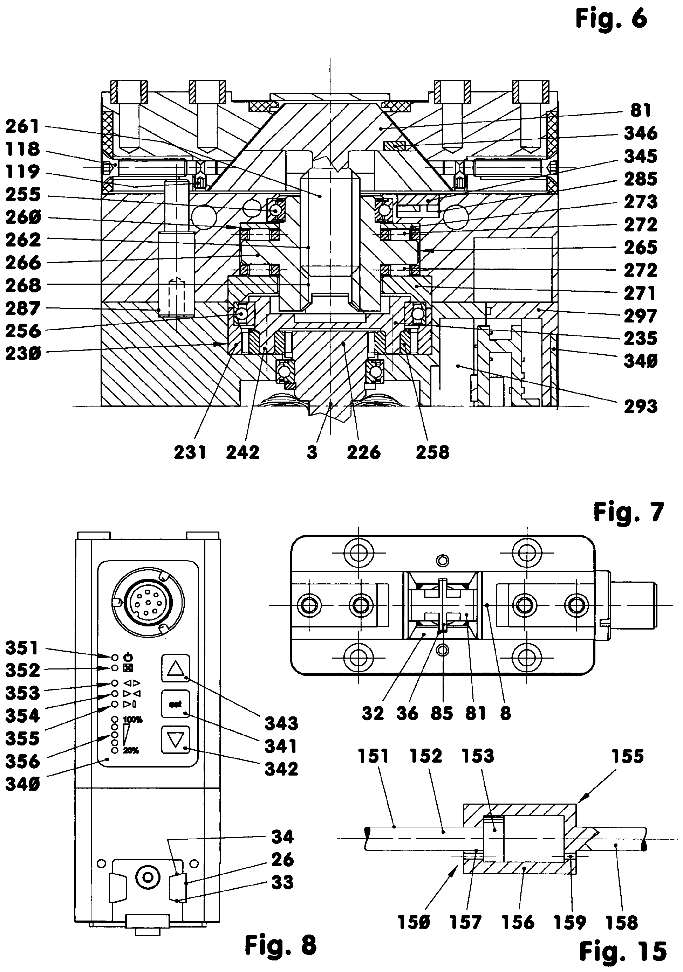

Jede Führungsschiene (31, 32) hat einen sechseckigen Querschnitt und weist zwei einander spiegelsymmetrisch gegenüberliegende Tragflanken (33, 34) auf, vgl. Figur 8, die einen Winkel von 30 Winkelgraden einschließen. Die Spiegelebene halbiert die Führungsschiene (31, 32) entlang ihrer horizontalen Längsmittenebene. Die Tragflanken (33, 34) überdecken mindestens 75 Prozent der Führungsschienenhöhe, wobei die Führungsschienenhöhe parallel zu den Mittellinien der die Führungsschiene (31, 32) positionierenden Passstifte (42) gemessen wird.

Mindestens eine der Führungsschienen (31, 32) weist mittig eine Quernut (36) auf, vgl. Figur 7. Diese Quernut (36) dient der zusätzlichen verschleißfesten Führung des im Doppelschiebekeilgetriebe (80) verwendeten Doppelschiebekeils (81). Ggf. können die einzelnen Führungsschienen (31, 32) auch aus zwei oder mehreren hintereinander angeordneten Abschnitten aufgebaut sein.

Im Ausführungsbeispiel sind die Führungsschienen (31, 32) jeweils mit zwei Senkschrauben (41) am Führungsgrundkörper (10) befestigt, vgl. Figur 1. Vorab werden die Führungsschienen (31, 32) jeweils mit Hilfe von zwei Passstiften (42) am Führungsgrundkörper (10) positioniert. Die Passstifte sind jeweils im Bereich zwischen zwei Verschraubungen angeordnet.

Um ein maximales Führungsspiel von weniger als 0,05 mm zwischen den Führungsschienen (31, 32) und den Schlitten (100, 101) zu erzielen, können die Führungsschienen nach dem Einbau in den Führungsgrundkörper (10) durch Hartmetallfräsen oder Überschleifen feinbearbeitet werden.

In der Unterseite (13) des Führungsgrundkörpers (10) befindet sich eine zentrale, durchgehende Stufenbohrung (17), deren einzelne Stufungen in einem Durchmesserbereich von 17 bis 34 mm liegen. In der ersten Stufung lagert sie einen Axialdruckring (271), vgl. Figur 6. Auf diesem stützt sich in der zweiten Stufung die zwischen zwei Axialnadellagern (272) gelagerte Spindelmutter (265) ab. Die dritte Stufung der Stufenbohrung (17) dient der radialen Lagerung einer Spindelmutter (265) mittels eines Rillenkugellagers (255). Die vierte und kleinste Stufung stellt den axialen Anschlag für den Außenring des Rillenkugellagers (255) dar. Zwischen dem Rillenkugellager (255) und dem oberen Axialnadellager (272) ist eine Axiallagerscheibe (273) angeordnet.

Die Stufenbohrung (17) mündet in die Führungsnut (21). Nach Figur 3 ist links neben der Stufenbohrung (17) in der vertikalen Mittenlängsebene (8) eine Passstiftbohrung (20) eingearbeitet. In den langen Seitenwandungen des Führungsgrundkörpers (10) sind zwei Querdurchgangsbohrungen (16) mit Zylindersenkungen angeordnet. U.a. kann über sie die Vorrichtung z.B. an einem Handhabungsgerät (6) befestigt werden.

An der Unterseite (13) des Führungsgrundkörpers (10) ist der quaderförmige Antriebsgrundkörper (280) zentriert angeordnet. Als Zentrierung dient zum einen ein in der Passstiftbohrung (287) sitzender Passstift (42) und zum anderen ein in der Stufenbohrung (17) angeordneter Axialdruckring (271), der zugleich in die zentrale durchgehende Stufenbohrung (283) des Antriebsgrundkörpers (280) hineinragt. Der Antriebsgrundkörper (280) hat einen zumindest annähernd vergleichbaren horizontalen Querschnitt wie der Führungsgrundkörper (10).

Der obere Teil der Stufenbohrung (283) weist nur eine Stufung auf, die von der Oberseite (281) des Antriebsgrundkörpers (280) aus sichtbar ist. Diese Stufung ist die Hohlradsitzbohrung (284), in der ein ggf. mit 56 Zähnen ausgestattetes Hohlrad (231) ortsfest, z.B. eingepresst oder eingeklebt, sitzt. Das Hohlrad (231) des Planetengetriebes (230) ist nach Figur 6 im oberen Bereich zur Schaffung eines Sitzes des Rillenkugellagers (256) aufgebohrt. Der Durchmesser der Aufbohrung ist größer als der Fußkreisdurchmesser des Hohlrades (231). Eine vergleichbare Aufbohrung besitzt auch der Axialdruckring (271), in dem sich ebenfalls der Außenring des Rillenkugellagers (256) abstützt.

Nahe der Stufenbohrung (283) sind mit einer 90-Winkelgradteilung vier Durchgangsbohrungen (288) angeordnet, über die der Führungs- und der Antriebsgrundkörper (10, 280) mittels der Schrauben (68) verbunden werden, vgl. Figuren 4 bis 5. Neben jeder Durchgangsbohrung (288) befindet sich eine im Durchmesser größere vertikale Befestigungsbohrung (289), über die die Vorrichtung im Ausführungsbeispiel am Maschinenschlitten (6) befestigt ist, vgl. Figur 1. Bis auf zwei einander diagonal gegenüberliegende Bohrungen sind alle anderen Befestigungsbohrungen (15, 16) mit den zu den jeweiligen Befestigungsschrauben passenden Senkungen ausgestattet. Die vertikalen Befestigungsbohrungen (289) setzen sich auch im Führungsgrundkörper (10) fort.

Die Unterseite (282) des Antriebsgrundkörpers (280) hat eine Deckelausnehmung (291), vgl. Figur 1. Die Deckelausnehmung erstreckt sich von der vorderen bis zur hinteren Längsseitenwandung des Antriebsgrundkörpers (280). Von der Deckelausnehmung (291) aus ragt eine z.B. 42 mm tiefe Hauptbohrung (292) in den Antriebsgrundkörper (280) in Richtung der Führungsnut (21) hinein, vgl. Figur 3. Die Hauptbohrung (292), in der der Stator (229) eines z.B. bürstenlosen Elektromotors (221) eingesetzt ist, vgl. Figur 5, hat hier einen kreisrunden Querschnitt, dessen Durchmesser z.B. 40 Prozent der Antriebsgrundkörpergesamtlänge entspricht. In sie (292) mündet von oben her die Durchbruchsbohrung (286), in der das obere Wälzlager (224) angeordnet ist.

Der Elektromotor (221) hat beispielsweise eine Nennleistung von 81 W und eine Nenndrehzahl von 9350 U/min. Das an seiner Rotorwelle (222) abgegebene Drehmoment beträgt 0,09 Nm.

In die nach Figur 3 rechte, schmale Seitenwandung ist eine z.B. 21 mm tiefe Ausnehmung (293) zur Aufnahme von elektrischen oder elektronischen Baugruppen eingearbeitet. Die Ausnehmung (293) mündet im unteren Bereich des Antriebsgrundkörpers (280) in die Hauptbohrung (292). Die Ausnehmung (293) ist mit einem ggf. mit vier Senkschrauben am Antriebsgrundkörper (280) befestigbaren rechteckigen Seitendeckel (297) verschließbar. Der Deckel (297) trägt eine elektrische Steckverbindung und eine Bedientafel (340).

Der das Antriebsgehäuse (280) unten verschließende Deckel (71) ist mit dem Antriebsgrundkörper (280) über vier Zylinderschrauben (68) verschraubt. Zur Aufnahme der Schraubenköpfe der Zylinderschrauben (68) weist der Deckel (71) Senkungen oder Einfräsungen auf, die in den Bereich der Längsseitenwandungen reichen, vgl. Figur 1.

Der Deckel (71) hat eine rautenförmige Ausnehmung, in der ein separater Lagerbock (73) passgenau einsetzt ist. Der Lagerbock (73) weist zur Aufnahme eines die Rotorwelle (222) unten lagernden Wälzlagers (223) eine Lagerbohrung (74) auf. Er besitzt mindestens eine weitere Ausnehmung zur Lagerung verschiedener elektronischer Baugruppen. In der Ausnehmung ist u.a. eine Platine (299) mit einer Kombination aus einem Drehwinkelgeber und einem Drehzahlmesser montiert, vgl. Figur 3.

In der Hauptbohrung (292) ist der Stator (229) des Elektromotors (221) angeordnet. Der Stator (229) ist dort z.B. verklemmt oder verklebt. Er umgibt den auf der Rotorwelle (222) drehfest sitzenden Rotor (225). Das obere Ende der Rotorwelle (222) trägt ein z.B. angeformtes Sonnenrad (226) des Planetengetriebes (230). Unterhalb des Sonnenrades (226), dessen Verzahnung z.B. 28 Zähne aufweist, befindet sich auf der Rotorwelle (222) der Sitz des Dünnringlagers (224). Letzteres ist dort mittels eines Sicherungsringes axial gesichert.

Das Sonnenrad (226) gehört zu dem als erstes Getriebe bezeichneten Planetengetriebe (230), vgl. auch Figur 4. Es kämmt mit z.B. vier Planeten (258), die jeweils mit 14 Zähnen geradverzahnt sind. Die Planeten (258) sind auf den Stegzapfen (242) eines scheibenförmigen Getriebestegs (235) z.B. gleitgelagert.

Der Getriebesteg (235) ist an seinem Außenmantel in dem Rillenkugellager (256) geführt, das sich wiederum mit seinem Innenring im Hohlrad (231) abstützt. Die Planeten (258) kämmen mit dem ortsfesten Hohlrad (231). Entsprechend der beispielhaft angegebenen Zähnzahlen des Planetengetriebes (230) wird die Drehzahl des Sonnenrades ins Langsame übersetzt, so dass der Getriebesteg (235) pro Sonnenradumdrehung nur 0,333 Umdrehungen macht. Je nach Getriebeauslegung liegt die Übersetzung ins Langsame zwischen 1:2 und 1:7. Dabei kann das Planetengetriebe auch ein Verbundgetriebe oder ein zweistufiges Getriebe sein.

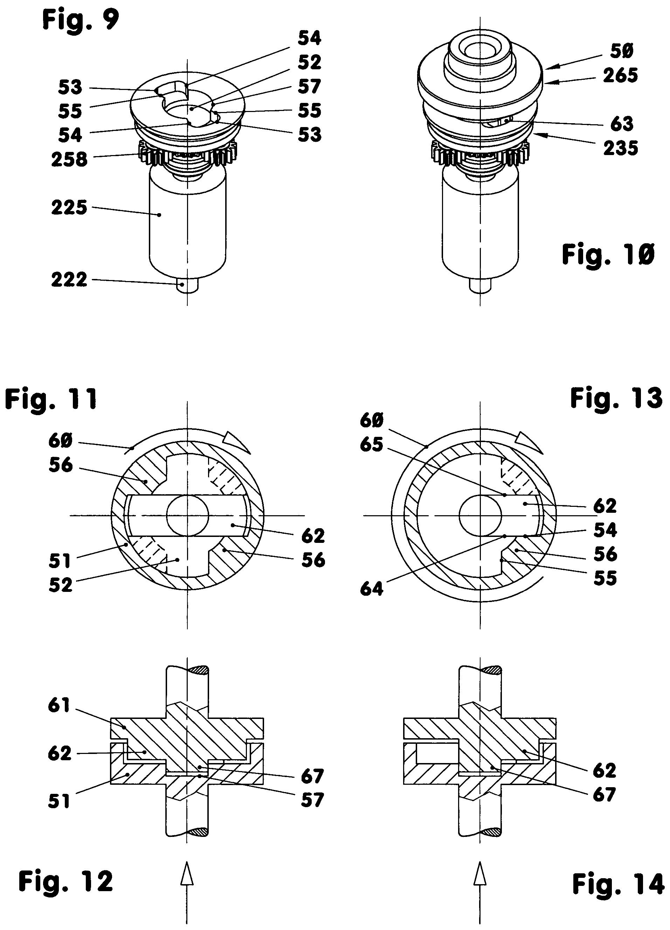

Nach Figur 9 hat der Getriebesteg (235), als Teil einer Wellenkupplung (50), in seiner oberen Stirnseite eine nichtzylindrische Kupplungsausnehmung (52). Letztere ist auch in Figur 5 im Horizontalschnitt dargestellt. Die Kupplungsausnehmung (52) besteht aus einer Überlagerung einer zylindrischen Bohrung (57) und zweier im Wesentlichen viereckigen Ausfräsungen (53). Die zentrumsfernen Ecken der viereckigen Ausfräsungen (53) sind ausgerundet. Die Ausfräsungen (53) haben in dem in Figur 5 dargestellten Schnitt einen annähernd trapezförmigen Querschnitt, wobei die in Umfangsrichtung jeweils gegenüberliegenden Flanken (54, 55) Ebenen sind, die sich unter einem Winkel von 30 Winkelgraden schneiden.

In diese Kupplungsausnehmung (52) greifen drehspielbehaftet an der Spindelmutter (265) angeordnete Kupplungselemente (62, 63) ein, womit die Spindelmutter (235) ein weiteres Teil einer Wellenkupplung (50) ist. Die Kupplungselemente (62, 63) stellen hier einen durch eine zentrale Bohrung unterbrochenen Balken dar, dessen ebene, einander gegenüberliegende Flanken (64, 65) pro Balkenseite z.B. in einer Ebene liegen. Je nach Drehrichtung des Elektromotors (221) liegen die Kupplungselemente (62, 63) an den ausnehmungsseitigen Flanken (54, 55) an.

Die Figuren 11 und 12 zeigen schematisch eine derartige, drehspielbehaftete Wellenkupplung (50), die u.a. auf der DIN 116 für Scheibenkupplungen basiert. Die Wellenkupplung (50) besteht aus einer Antriebsscheibe (51) und einer Abtriebsscheibe (61). Die Antriebsscheibe (51), die hier dem Planetengetriebesteg (235) entspricht, ist in der Regel dem Antrieb (220) nachgeschaltet und weist im Ausführungsbeispiel eine profilierte Kupplungsausnehmung (52) mit zwei Anschlagstegen (56) und einer Zentrierbohrung (57) auf. Die Abtriebsscheibe (61) hat anstelle der Kupplungsausnehmung (52) einen Mitnahmebalken (62). Letzterer ragt in die Kupplungsausnehmung (52) hinein. Mittig auf dem Mitnahmebalken (62) sitzt ein Zentrierbolzen (67), der in der Zentrierbohrung (57) der Antriebsscheibe (51) geführt ist.

In den Figuren 11 und 13 ist die Antriebsscheibe (51) in zwei Positionen dargestellt. Die erste Position zeigt die jeweilige Antriebsscheibe (51) vor dem Aufbrauch des Drehspiels, also bevor die Antriebsscheibe (51) den Mitnahmebalken (62) kontaktiert. Hier sind die Antriebsscheiben (51) und deren Schraffur mit durchgezogenen Linien dargestellt. Die zweite Position zeigt die jeweilige Antriebsscheibe (51) nach dem Aufbrauch des Drehspiels. Die Antriebsscheibe (51) liegt nun am entsprechenden Mitnahmebalken (62) an. Die Bereiche der geschwenkten Antriebsscheibe (51), die nicht deckungsgleich mit der noch ungeschwenkten Antriebsscheibe (51) sind, sind einschließlich ihrer Schraffur gestrichelt dargestellt.

Dreht sich die in Figur 11 dargestellte Antriebsscheibe (51) im Uhrzeigerdrehsinn, kontaktiert sie den Mitnahmebalken (62) nach einer Drehung um einen Kupplungswinkel (60) von 90 Winkelgraden über die Anschlagstege (56). Vor dem Aufbrauch des Kupplungswinkels (60) bewegt sich der motorferne Teil des Getriebezugs, also hier die Abtriebsscheibe (61), nicht mit.

Die Figuren 13 und 14 zeigen eine Wellenkupplung (50) mit besonders großem Drehspiel- bzw. Kupplungswinkel (60). Dazu wird bei der Antriebsscheibe (51) auf einen zweiten Anschlagsteg (56) verzichtet. Bei der Abtriebsscheibe (61) steht der Mitnahmebalken (62) nur einarmig vom Zentrierbolzen (67) ab.

Hier ergibt sich ein Kupplungswinkel (60) von 270 Winkelgraden.

Durch die asymmetrische Gestaltung bzw. Anordnung des Mitnahmebalkens (62) und des Anschlagsteges (56) können an den An- und Abtriebsscheiben (51, 61) entsprechende Materialzugaben oder -wegnahmen vorgenommen werden, um eine statische und/oder dynamische Unwucht zu vermeiden. Selbstverständlich können die Antriebsscheibe (51) und die Abtriebsscheibe (61) ihre geometrische Gestalt tauschen, so dass die Antriebsscheibe (51) den oder die Mitnahmestege (56) und die Abtriebsscheibe (61) die Kupplungsausnehmung (52) aufweist.

Alternativ zeigt die Figur 15 ebenfalls nur schematisch eine, z.B. aus überwiegend rotationssymmetrischen Teilen gebildete, longitudinalspielbehaftete Schubkupplung (150) für einen in eine Längsrichtung wirkenden Antrieb. Das Antriebselement (151) ist hier ein an einer Kolbenstange (152) gelagerter Kolben (153). Das Abtriebselement (155) ist ein Zylinder (156), an dem koaxial eine Abtriebsstange (158) angeordnet ist. Der Zylinder (156) hat linksseitig einen zentralen Kolbenstangendurchbruch (157), der die Kolbenstange (152) umgibt. Beide Böden des Zylinders (156) haben z.B. jeweils mindestens eine Entlüftungsbohrung(159). Der Kolben (153) und die Kolbenstange (152) sind im Zylinder (156) geradgeführt.

Schiebt der Antrieb die Kombination aus Kolbenstange (152) und Kolben (153) nach rechts, vgl. Figur 15, so bewegt sich das Abtriebselement (155) erst, wenn der Kolben (153) sich am kolbenstangendurchbruchsfreien Zylinderboden anlegt. Vor der Anlage wird das u.a. von der Zylinderlänge abhängige Longitudinalspiel aufgebraucht.

Die Spindelmutter (265), vgl. Figur 6, ist im Wesentlichen ein rohrförmiges Drehteil, das zentral eine Gewindebohrung (268) aufweist und an dem außen ca. mittig ein Axiallagerflansch (266) angeformt ist. Die planen Anlageflächen des Axiallagerflansches (266), die senkrecht zur Hauptmittellinie (3) orientiert sind, dienen zwei ihn einspannenden Axialrollenlagern (272) als Laufflächen. Ggf. können die Axialrollenlager (272) auch durch andere Axiallagertypen ersetzt werden, die z.B. als Wälzkörper Kugeln oder Kegelrollen aufweisen. Auch eine Gleitlagerung ist hier denkbar.

Nach Figur 6 weist die Spindelmutter (265) oberhalb der Axiallagerung einen Wellenabsatz auf, der den Sitz des Rillenkugellagers (255) bildet. Zwischen dem Rillenkugellager (255) und dem oberen Axialnadellager (272) befindet sich die in der Stufenbohrung (17) axial und radial anliegende Axiallagerscheibe (273). Die untere Stirnseite der Spindelmutter (265) trägt die in die Kupplungsausnehmung (52) des Planetengetriebestegs (235) eingreifenden nahezu quaderförmigen Kupplungselemente (62, 63), vgl. auch Figur 5.

Die axial eingespannte Spindelmutter (265) sitzt auf einem als Gewindespindel (261) ausgeführten Hubschlitten. Die Gewindespindel (261), die am Doppelschiebekeil (81) angeformt ist, hat ein in die Gewindebohrung (268) der Spindelmutter (265) passendes Trapezgewinde (262) DIN 103 TR 8 x 1,5. Auch ein 8 x 2-Trapezgewinde ist hier denkbar.

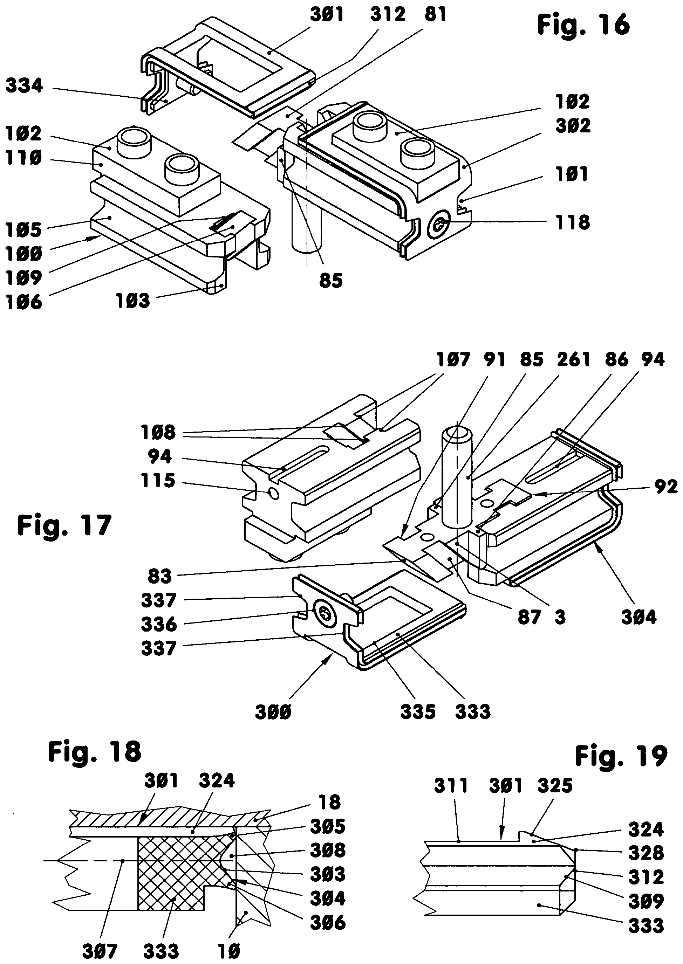

Der Doppelschiebekeil (81), der in der Führungsnut (21) als Teil eines Doppelschiebekeilgetriebes (80) angeordnet ist, ist im Wesentlichen ein vierkantstabartiges Bauteil mit quadratischem Querschnitt. In seinem mittleren Bereich ist beidseitig jeweils ein seitlich senkrecht abstehender Stützsteg (85, 86) angeformt, vgl. Figuren 16 und 17. Der Stützsteg (85, 86), der sich parallel zur Mittellinie (3) über die gesamte Doppelschiebekeilhöhe erstreckt, ist 2 mm breit. Er steht 2,4 mm über seine Quadergrundform über.

Der Doppelschiebekeil (81) weist an seinen stirnseitigen Enden jeweils eine im Schiebekeilwinkel abgeschrägte Stirnfläche (83, 84) auf. Der Schiebekeilwinkel liegt z.B. zwischen 20 und 50 Winkelgraden gegenüber der Greifrichtung (9). Im Ausführungsbeispiel beträgt er 50 Winkelgrade.

Parallel zu den abgeschrägten Stirnseiten (83, 84) befinden sich jeweils zwischen einer Stirnseite (83, 84) und einem Stützsteg (85, 86), pro Längsseite des Doppelschiebekeils (81), eine Keilnut (87), vgl. Figur 17. Die jeweilige Keilnut (87) ist parallel zu der nächstgelegenen Stirnseite (83, 84) orientiert. Sie hat dabei einen rechteckigen Querschnitt. Der Doppelschiebekeil (81) hat somit pro Längsseite zwei Keilnuten (87). Da er zur vertikalen Mittenlängsebene (8) symmetrisch aufgebaut ist, liegt jeder Keilnut (87) einer Längsseite eine zweite Keilnut gegenüber. Auf diese Weise bildet jeder stirnseitige Bereich des Doppelschiebekeils (81) einen - im Querschnitt betrachtet - schräg angeordneten T-förmigen Keilsteg (91, 92).

Jeder Keilsteg (91, 92) des Doppelschiebekeils (81) greift formschlüssig in einen in der Führungsnut (21) gelagerten Schlitten (100, 101) ein. Jeder Schlitten ist primär ein quaderförmiger Körper, in den beidseitig Schlittenführungsnuten (105) eingearbeitet sind, mit der der einzelne Schlitten (100, 101) auf den Führungsschienen (31, 32) gleitgelagert ist.

Der einzelne Schlitten (100, 101), dessen Breite z.B. 0,2 mm kleiner ist als die Breite der Führungsnut (21), hat in der dem Doppelschiebekeil (81) zugewandten Stirnfläche (103) eine schräg angeordnete T-Nut (106), mit der der Schlitten (100, 101) den Keilsteg (91, 92) des Doppelschiebekeils (81) mit einem unter 0,1 mm liegenden Spiel umgreift. Nach den Figuren 16 und 17 sind in den Grund der T-Nut (106) mit Schmiermittel befüllbare Schmiertaschen (109) eingearbeitet. Auf der dem Doppelschiebekeil (81) abgewandten Stirnfläche weist der einzelne Schlitten (100, 101) eine Bohrung (115) auf, deren Mittellinie auf der Mittenlängsebene (8) liegt. In dieser Bohrung (115) steckt zur Befestigung der Führungsnutdichtung (300) eine Schraube (118), die im Bereich ihres freien Endes eine umlaufende Kerbe aufweist. In diese Kerbe ragt jeweils die Spitze eines quer zur Bohrung (115) sitzenden Gewindestifts (119) hinein, um die Schraube (118) unter Zugspannung zu setzen und diese mit dem Dichtungskörper (301, 302) zusammen zu fixieren, vgl. Figur 6.

Auf der Oberseite (102) jedes Schlittens (100, 101) befindet sich ein z.B. quaderförmiger, z.B. 3,4 mm hoher Adapteraufsatz (110), der bei montiertem Schlitten (100, 101) oben z.B. 1,5 mm - über die Gehäuseoberseite (12) überstehend - aus der Führungsnut (21) herausragt. Zugleich steht der Adapteraufsatz (110) über die jeweils außenliegende, der T-Nut (106) abgewandten Stirnseite, um z.B. 1,8 mm über. Die ebene Oberseite (102) des Adapteraufsatzes (110) hat zwei mit Zylindersenkungen ausgestattete Gewindebohrungen, an denen die Greifbacken (1, 2) lösbar befestigt werden. In den Zylindersenkungen stecken Zentrierhülsen zur präzisen, zumindest formschlüssigen Positionierung der Greifbacken (1, 2) auf den Schlitten (100, 101). Ggf. sind dort die Greifbacken (1, 2) auch direkt angeformt oder unlösbar fixiert.

In die Unterseite eines jeden Schlittens (100, 101) ist ein Anschlaglangloch (94) eingearbeitet, Figuren 17 und 2. Nach Figur 2 ragt in das linke Anschlaglangloch (94) der Passstift (42) hinein. Bei dem Auseinanderfahren der Schlitten (100, 101) legt sich das innere Ende des Anschlaglanglochs (94) am Passstift (42) an, um den Schlittenhub zu begrenzen.

Die Schlitten (100, 101) sind in der Führungsnut (21), vgl. Figur 2, so hintereinander angeordnet, dass sich bei minimalem Greifbackenabstand ihre einander zugewandten Stirnseiten (103) kontaktieren oder zumindest fast berühren.

Der mittlere Bereich der Nutöffnung der Führungsnut (21) ist mit einer z.B. rechteckigen Abdeckplatte (18) verschlossen. Die Abdeckplatte (18) ist so breit ausgelegt, dass die beiden Schlitten (100, 101), in Schließstellung der Greifbacken (1, 2), diese gerade noch nicht berühren.

Um das Gehäuseinnere (5) und die Führungsschienen (31, 32) vor Schmutz oder sonstigen verschleißfördernden Verunreinigungen zu schützen, werden nach den Figuren 16 und 17 auf den Schlitten (100, 101) winkelförmige Führungsnutdichtungen (300) aufgesetzt und festgeschraubt. Dabei umgibt die einzelne Führungsnutdichtung (300) im Ausführungsbeispiel den Adapteraufsatz (110) des jeweiligen Schlittens (100, 101).

Die einzelne Führungsnutdichtung (300) besteht pro Schlitten (100, 101) aus dem Dichtungskörper (301, 302). Der Dichtungskörper (301, 302) ist aus thermoplastischem Elastomer (TPE) hergestellt, das u.a. gummielastische Eigenschaften hat. Er weist einen langen Schenkel (333) und einen kurzen Schenkel (334) auf. Er kann zumindest bereichsweise auf dem jeweiligen Schlitten (100, 101) aufgeklebt sein.

Der lange Schenkel (333) hat eine rechteckige Positionierausnehmung (335), mit der er im montierten Zustand die Greifbackenmontagebasis des jeweiligen Schlittens (100, 101) umgibt. Der kurze Schenkel (334) besitzt ca. mittig eine Montagebohrung (336) und seitlich jeweils eine Nut (337). Die Montagebohrung dient zum Durchführen der die Führungsnutdichtung (300) am Schlitten haltenden Schraube (118). Jede Nut (337) umgibt mit Spiel eine Führungsschiene (31, 32).

Der elastische Dichtungskörper (301, 302) dichtet das von der Führungsnut (21) umschlossene Gehäuseinnere (5) entlang der Führungsgrundkörperoberseite (12) und entlang der Stirnseite (14) zur Umgebung hin ab.

An den Führungsnutwandungen (23, 24) und Führungsnutgrund liegt der einzelne Dichtungskörper (301, 302) mit einem doppellippigen Profil (303) an. Das Profil (303) hat eine obere, äußere Lippe (305), die als erste Barriere gegen von außen eindringenden Schmutz in Form von Staub und/oder Feuchtigkeit dient. Durch die werkstoffeigene Spannkraft wird die Lippe (305) nach dem Einbau geringfügig nach oben gedrängt. Eine bezüglich Größe und geometrischen Abmessungen vergleichbare Lippe (306) ist zum Gehäuseinnenraum (5) hin geneigt. Sie hat u.a. die Aufgabe, das Schmiermittel des Doppelschiebekeilgetriebes (80) im Gehäuseinnenraum (5) zurückzuhalten. Die Lippe (306) ist zumindest nahezu symmetrisch zur oberen, äußeren Lippe (305) ausgeführt, wobei die in Figur 18 eingezeichnete Achse (307) als Symmetrielinie dient.

Dabei schließen die beiden Dichtlippen (305, 306) einen kanalartigen, z.B. mindestens 0,25 mm tiefen Hohlraum (308) ein, der an der inneren Stirnseite (312) mit einer v-förmigen Öffnung (309) endet. Entlang der inneren Stirnseite (312) weist die Außenseite (311) des Dichtungskörpers (301, 302) eine dritte Dichtlippe (324) auf, die bei einem Verfahren der Schlitten (100, 101) an der Unterseite der Gehäuseabdeckung (18) entlanggleitet. Die Dichtlippe (324), vgl. Figur 19, hat die Form eines Keils, dessen Vorderkante (328) in Richtung der Grundkörpermittellinie (3) weist.

Beim Löse- und/oder Greifhub bewegen sich die Dichtungskörper (301, 302) zusammen mit den Schlitten (100, 101) innerhalb der Führungsnut (21) hin und/oder her. Beim Greifhub wirkt die innere Dichtlippe (306) als ein das Schmiermittel vor sich herschiebender Abstreifer. Beim Lösehub übernimmt die äußere Dichtlippe (305) die Aufgabe des die Führungsschiene (31, 32) und die Führungsnut (21) reinigenden Abstreifers.

Für die Schließ- bzw. Greifbewegung wird der Hubschlitten (261), vgl. Figuren 3 und 6, der sich zusammen mit dem Doppelschiebekeil (81) in seiner oberen Endlage befindet, mittels des aus den Getrieben (230, 260) und dem Elektromotor (221) bestehenden Antriebs (220) aus dieser Position heraus nach unten bewegt. Dazu wird der Elektromotor (221) bestromt. In der Folge treibt das mit der Rotorwelle (222) verbundene rechtsdrehende Sonnenrad (226) die Planetenräder (258) an. Diese wiederum stützen sich am ortsfesten Hohlrad (231) ab, wodurch zwangsläufig der Steg (235) rechtsdrehend um die Hauptmittellinie (3) rotiert. Der Steg (235) dreht sich als Antriebsscheibe (51) der Kupplung (50) zunächst nahezu ohne Last, da die treibenden Flanken (54) der Ausfräsungen (53) die entsprechenden Gegenflanken (64) der Kupplungselemente (62, 63) noch nicht kontaktiert haben. Der Steg (235) legt sich erst an der Spindelmutter (265) an, wenn der Rotor (225) des Elektromotors (221) schon eine viertel Umdrehung um die Hauptmittellinie (3) gedreht hat. Bis zu diesem Zeitpunkt haben sich nur die rotierenden Teile des motornahen Teils des Getriebezugs bewegt, das sind hier die Rotorwelle (222), der Rotor (225), das Sonnenrad (226), der Getriebesteg (235) und die vier umlaufenden Planeten (258), vgl. Figur 9. Das gemeinsame Massenträgheitsmoment, der um die Hauptmittellinie (3) bewegten Bauteile, beträgt im Ausführungsbeispiel 4,5 kgmm².

Liegen nun die treibenden Flanken (54) der Ausfräsungen (53) an den Gegenflanken (64) der Kupplungselemente (62, 63) an, ist das 30 Winkelgrade betragende Drehspiel der Kupplung (50) verbraucht. Die Spindelmutter (265) läuft als Abtriebsscheibe (61) der Kupplung (50) nun mit um. Das Massenträgheitsmoment des gesamten Getriebezugs beträgt nun hier um die Hauptmittellinie (3) z.B. 7,6 kgmm².

Bis zur Mitnahme der Spindelmutter (265) war das Massenträgheitsmoment um mehr als 40 Prozent kleiner, wodurch für das Anfahren eine geringere elektrische Leistung erforderlich ist. Zudem muss in dieser Phase nicht die Rollreibung der Wälzlager (255) und (272) überwunden werden. Auch entfällt die Haft- und Gleitreibung im Spindelgewinde (262, 268) des Schraubgetriebes (260) und in den Arbeitsfugen des Doppelschiebekeilgetriebes (80).

Durch die Mitnahme der zum zweiten Getriebe (260) gehörenden Spindelmutter (265) wird die Gewindespindel (261) bzw. der Hubschlitten in eine Hubbewegung versetzt. Der sich damit nach unten bewegende Doppelschiebekeil (81) zieht die Schlitten (100, 101) in der Führungsnut (21) nach innen, zur Mitte hin. Hierbei taucht der Hubschlitten (261) tiefer in die Gewindebohrung (268) der Spindelmutter (265) ein.

Der Doppelschiebekeil (81) wird über seine Stützstege (85, 86) zusätzlich in den Quernuten (36) der Führungsschienen (31, 32) geführt. Dazu liegen die Stützstege (85, 86) mit einem Spiel, das kleiner ist als 0,05 mm, an den Seitenflanken der Quernuten (36) an. Die Stirnflächen der Stützstege (85, 86) kontaktieren den jeweiligen Nutgrund der Quernuten (36) nicht.

Bei der Schließbewegung kommen die Keilflächen (108) am Doppelschiebekeil (81) zur Anlage. Sobald sich die Greifbacken (1, 2) am Werkstück (7) angelegt haben, steigt die Last des Elektromotors (221) aufgrund des auf Block fahrenden Getriebezugs sprunghaft an. Durch das Blockieren des Getriebezugs und damit auch der Rotorwelle (222), steigt der Motorstrom über eine vorgegebene Grenze, was die elektronische Motorsteuerung zum Abschalten der Motorbestromung veranlasst. Eine klemmkraftbedingte rückdrehende Wirkung entfällt im zweiten Getriebe (260), da das Schraubgetriebe (260) bei der gewählten Spindelsteigung selbsthemmend ausgelegt ist. Das Schraubgetriebe (260) erzeugt pro Umdrehung einen Hub von 1,5 oder 2 mm.

Zum Lösen des Werkstückes (7) wird der Elektromotor (221) so bestromt, dass sich die Rotorwelle (222) des Ausführungsbeispiels linksdrehend in Bewegung setzt. Auch hier können die Rotorwelle (222), der Rotor (225), das Sonnenrad (226), der Getriebesteg (235) und die vier umlaufenden Planeten (258) - ohne das Schraub- und die Doppelkeilgetriebe (80) bewegen zu müssen - beschleunigt werden. Erst nach dem Aufbrauch des Kupplungswinkels (60) schlagen die Flanken (54) der Kupplungsausnehmung (53) an den entsprechenden Gegenflanken (64) der Mitnahmeelemente (62, 63) an, um die Spindelmutter (265) und die nachgeschalteten beweglichen Vorrichtungsteile in Bewegung zu versetzen. Aufgrund der schon beim Anlaufen in den rotierenden Teilen des motornahen Getriebezugs gespeicherten Bewegungsenergie wird - ohne die sonst oft bisher erforderliche Überstromung des Motors - die Spindelmutter (265) ruckartig in Bewegung versetzt, wodurch sich die Greifbacken (1, 2) vom Werkstück (7) problemlos lösen. Der Getriebesteg (235) bzw. die Antriebsscheibe (51) wirkt wie ein Schlag- oder Presslufthammer auf die Spindelmutter (265) bzw. die Abtriebsscheibe (61).

Der nach oben fahrende Doppelschiebekeil (81) drückt nun über die beiden Getriebe (230, 260) - unter Anlage an die Keilflächen (107) - die Schlitten (100, 101) bzw. die Greifbacken (1, 2) solange auseinander, bis das Ende des Anschlaglanglochs (94) am Passstift (42) zur Anlage kommt. Das Stromlosschalten des Elektromotors (221) erfolgt in der gleichen Weise wie beim Greifen.

Für eine vereinfachte Handhabung der Vorrichtung ist am Antriebsgrundkörper (280) eine Bedientafel (340) angeordnet, vgl. Figur 1. Nach Figur 8 zeigt diese beispielsweise 10 LEDs (351-356) zum Anzeigen bestimmter Eigenschaften des hier verwendeten Parallelgreifers, sowie drei Bedientasten (341-343).

Die Tasten (341-343) werden dazu benutzt, dem Parallelgreifer das Anlegen der Greifbacken (1, 2) an ein bestimmtes Werkstück (7) erlernen zu lassen. Dazu werden die Greifbacken (1, 2), z.B. nach einem gezielten Reduzieren des Motorstroms, durch ein Betätigen der Vor-Taste (342) an das Werkstück (7) herangeführt. Die Stärke des Motorstroms ist dann ein Maß für die Greifkraft. Abschließend wird die Greifposition mittels der Set-Taste (341) dauerhaft übernommen.

Die LEDs (353-355) stellen die jeweilige Greiferposition dar, die mit Hilfe eines im Antriebsgrundkörper (280) angeordneten Hall-Sensors (345) absolut erfasst wird. Der Hall-Sensor (345) sitzt in einer Ausnehmung (285), die im Antriebsgrundkörper (280) neben dem Rillenkugellager (255) angeordnet ist, vgl. Figur 6. Gegenüber dem Hall-Sensor (345) befindet sich in einer in der Unterseite des Doppelschiebekeils (81) vorhandenen Sacklochbohrung ein kleiner scheibenförmiger Permanentmagnet (346). Er sitzt dort eingeklebt oder eingeklemmt.

Die z.B. fünf LEDs (356) stehen jeweils für eine Klemmkraft, die abgestuft zwischen 20 und 100 Prozent angegeben wird. Für eine Maximalklemmkraft von 100 Prozent steht die obere LED. Die Klemmkraft ist auch hier eine Funktion der Motorbestromung im Greifhub.

Soll die Klemmkraft direkt in einem der Getriebe gemessen werden, kann ein Kraftsensor z.B. auf dem Axialdruckring (271) aufgebracht werden, mit dessen Hilfe die auf die Spindelmutter (265) wirkende Kraft direkt erfasst werden kann. Ggf. wird der Kraftsensor zum Schutz mit einer Axiallagerscheibe abgedeckt.

Die von den Weg- und Kraftsensoren zur Verfügung gestellten Signale werden in der in der seitlichen Ausnehmung (293) platzierten Elektronik ausgewertet und teilweise sowohl an der Bedientafel (340) durch Lichtsignale dargestellt als auch als Signale über die Steckverbindung (360) an eine externe Steuerung weitergegeben.

Alternativ zu dem bisher beschriebenen Verfahren zum Öffnen und Schließen der jeweiligen Brems-, Klemm- oder Greifvorrichtung ist es auch möglich, bei jedem Motoranfahrvorgang die Wegsignale des Hallsensors (345) in kurzen Zeitintervallen abzufragen, um prüfen zu können, ob sich beispielsweise die Greifbacken (1, 2) beim Öffnen vom Werkstück sofort lösen oder der erste Aufbrauch des Kupplungswinkels (60) dazu nicht ausreicht. Im letzteren Fall wird in der vorrichtungseigenen Steuerung der Elektromotor (221) - überwacht durch mindestens einen auf der Platine (299) angeordneten Sensor - um so viele Umdrehungen zurückgedreht, dass sich der Getriebesteg (235) um 75 bis 95 Prozent des jeweiligen Kupplungswinkels (60) - hier durch eine Rechtsdrehung - zurückbewegt. Anschließend beschleunigt der Motor (221) wieder linksdrehend. Fahren auch dieses Mal die Greifbacken (1,2) nicht auseinander, wird das beschriebene Verfahren bis z.B. zehn Mal hintereinander wiederholt. Dieser gesamte Vorgang benötigt weniger als drei Sekunden und ist nur durch ein kurzzeitiges Vibrieren der Vorrichtung wahrnehmbar. Sollte auch dann noch kein Lösen der Greifbacken (1, 2) erfolgt sein, wird kurzzeitig der Motorstrom erhöht und der Vorgang von neuem gestartet.

Dieses Verfahren kann auch zum Schließen der Greifbacken (1, 2) genutzt werden, wenn von der Vorrichtung z.B. kurzfristig größere Lasten (7) gehalten oder größere Klemmkräfte erzeugt werden sollen.

### Bezugszeichenliste:

- 1, 2: Greifelemente, Greifbacken
- 3: Mittellinie zu (10, 280, 221), Hauptmittellinie
- 5: Gehäuseinnenraum, Gehäuseinneres
- 6: Maschinenschlitten, Maschinenteil, Handhabungsgeräteteil
- 7: Werkstück, Last
- 8: vertikale Mittenlängsebene
- 9: Greifrichtung

- 10: Führungsgrundkörper, Gehäuse
- 12: Grundkörperoberseite
- 13: Grundkörperunterseite
- 14: Stirnseite des Grundkörpers
- 15: Befestigungsbohrungen, vertikal
- 16: Querdurchgangsbohrungen
- 17: Stufenbohrung
- 18: Gehäuseabdeckung, Abdeckplatte
- 20: Passstiftbohrung, vertikal

- 21: Führungsnut
- 23, 24: Seitenwandungen, Führungsnutwandungen
- 26: Schienenführungsnut

- 31, 32: Führungsschiene, Schlittenführungsschiene
- 33, 34,: Tragflanken
- 36: Quernut
- 41: Senkschrauben für (31, 32)
- 42: Passstifte

- 50: Wellenkupplung, drehspielbehaftet; Getriebezugteil
- 51: nichtschaltbar Antriebsscheibe, vgl. (235)
- 52: Kupplungselement, Kupplungsausnehmung
- 53: Ausfräsungen
- 54, 55: Flanken
- 56: Anschlagstege
- 57: Zentrierbohrung, Bohrung

- 60: Kupplungswinkel, Drehspielwinkel
- 61: Abtriebsscheibe, vgl. (265)
- 62, 63: Kupplungselement, Mitnahmebalken
- 64, 65: Flanken von (62, 63), Gegenflanken
- 67: Zentrierbolzen
- 68: Zylinderschrauben für (10, 280, 71)

- 71: Deckel
- 73: Lagerbock
- 74: Lagerbohrung

- 80: Doppelschiebekeilgetriebe
- 81: Doppelschiebekeilelement, Doppelschiebekeil, Getriebebauteil
- 83, 84: Stirnseiten, Stirnflächen, schräg
- 85, 86: Stützstege
- 87: Keilnut
- 91, 92: Keilsteg, T-förmig
- 94: Anschlaglangloch

- 100, 101: Schlitten
- 102: Oberseite
- 103: Stirnseite, Stirnfläche
- 105: Schlittenführungsnuten
- 106: T-Nut
- 107: Keilflächen, Öffnungsanlage
- 108: Keilflächen, Schließanlage
- 109: Schmiertaschen

- 110: Adapteraufsatz
- 115: Bohrung für (300)
- 118: Schraube für (300)
- 119: Gewindestift mit Kegelspitze

- 150: Schubkupplung
- 151: Antriebselement
- 152: Kolbenstange
- 153: Kolben

- 155: Abtriebselememt
- 156: Zylinder
- 157: Kolbenstangendurchbruch
- 158: Abtriebsstange
- 159: Entlüftungsbohrungen

- 220: Antrieb
- 221: Elektromotor, bürstenlos
- 222: Rotorwelle, Welle, Abtriebsglied
- 223: Wälzlager, Rillenkugellager, unten
- 224: Wälzlager, Dünnringlager, oben
- 225: Rotor, Magnetkörper
- 226: Sonnenrad, verzahntes Bauteil, Abtriebsglied, Getriebeteil
- 229: Stator mit Wicklung
- 230: Planetengetriebe, erstes Getriebe; Getriebezugteil
- 231: Hohlrad, verzahntes Bauteil, Getriebeteil
- 235: Steg, scheibenförmig; Getriebeteil; Getriebesteg
- 242: Stegzapfen
- 255, 256: Wälzlager, Rillenkugellager; oben, unten
- 258: Planetenräder, verzahntes Bauteil, Getriebeteil

- 260: Schraubgetriebe, zweites Getriebe; Getriebezugteil
- 261: Hubschlitten, Gewindespindel, Getriebeglied
- 262: Spindelgewinde, Trapezgewinde, Getriebeglied
- 265: Spindelmutter
- 266: Axiallagerflansch
- 268: Gewindebohrung

- 271: Axialdruckring
- 272: Axialnadellager, Axiallager
- 273: Axiallagerscheibe

- 280: Antriebsgrundkörper, Gehäuse
- 281: Oberseite
- 282: Unterseite
- 283: Stufenbohrung
- 284: Hohlradsitzbohrung
- 285: Ausnehmung für (345)
- 286: Durchbruchsbohrung
- 287: Passstiftbohrungen
- 288: Durchgangsbohrungen für Verschraubung
- 289: Befestigungsbohrungen

- 291: Deckelausnehmung
- 292: Hauptbohrung
- 293: Ausnehmungen, seitlich

- 297: Seitendeckel
- 299: Platine mit Drehwinkelgeber und/oder Drehzahlmesser

- 300: Führungsnutdichtung
- 301, 302: Dichtungskörper, Elastomerkörper
- 303: Profil, seitlich
- 304: Doppellippe
- 305: Lippe, außen, Dichtlippe
- 306: Lippe, innen, Dichtlippe
- 307: Symmetrieachse, Mittellinie
- 308: Hohlraum, kanalartig
- 309: Öffnung
- 311: Außenseite
- 312: Stirnseite

- 324: Dichtlippe, Einfachlippe
- 325: Dichtflanke
- 328: Vorderkante

- 333: Schenkel, lang
- 334: Schenkel, kurz
- 335: Positionierausnehmung
- 336: Montagebohrung
- 337: Nuten

- 340: Bedientafel
- 341: Set-Taste, zentral
- 342: Vor-Taste
- 343: Zurück-Taste
- 345: Hall-Sensor
- 346: Permanentmagnet

- 351: LED für In-Betrieb-Status
- 352: LED für Störungs-Status
- 353: LED für Greiferposition: offen
- 354: LED für Greiferposition: geschlossen
- 355: LED für Werstückgreifposition
- 356: LEDs für verschieden eingestellte Klemmkräfte

- 360: Steckverbindung

## Patentansprüche

1. Verfahren zum Beschleunigen eines Getriebezuges einer Brems-, Klemm- oder Greifvorrichtung mit anfangs verringertem Massenträgheitsmoment,
- wobei der motornahe Teil des Getriebezuges aus dem rotierenden Teil eines Antriebsmotors und den nachgeschalteten auf einen Hubschlitten (261) wirkenden Getrieben (230, 260) vor dem motorfernen Teil dieses Getriebezuges beschleunigbar ist,
- wobei der motornahe Teil des Getriebezuges mit dem motorfernen Teil des Getriebezuges über eine nichtschaltbare drehspielbehaftete auf einer Scheibenkupplung basierende Wellenkupplung (50) aus einer Antriebsscheibe (51) und einer Abtriebsscheibe (61) oder eine longitudinalspielbehaftete Schubkupplung (150) verbunden ist und
- wobei das Drehspiel oder das Longitudinalspiel bei jedem Greif- und Lösevorgang vollständig zur Verfügung steht, um mit den schon beschleunigten Getriebeteilen die ruhenden Getriebeteile ruckartig in Bewegung zu versetzen und
- wobei sich bei einer drehspielbehafteten Wellenkupplung (50) bei jedem Drehrichtungswechsel Kupplungselemente (53) der Antriebsscheibe (51) und Kupplungselemente (62, 63) der Abtriebsscheibe (61) erst nach einem Kupplungswinkel (60) von mindestens 10 Winkelgraden gegenseitig über ebene Flanken (54, 55) und (64, 65) kontaktieren.

2. Verfahren gemäß Anspruch 1, **dadurch gekennzeichnet, dass** bei einer drehspielbehafteten Wellenkupplung (50) das Drehspiel zwischen 10 und 350 Winkelgraden liegt.

3. Antrieb für eine Brems-, Klemm- oder Greifvorrichtung, bei der in einem Gehäuse (10, 280) mindestens ein Elektromotor (221) und mindestens zwei Getriebe (230, 260) angeordnet sind, wobei der Elektromotor (221) ein Abtriebsglied (222) hat, das über die Getriebe (230, 260) auf einen Hubschlitten (261) wirkt,
- wobei zwischen dem Abtriebsglied (222) des Elektromotors (221) und dem Hubschlitten (261) mindestens eine drehspielbehaftete auf einer Scheibenkupplung basierende Wellenkupplung (50) oder eine longitudinalspielbehaftete Schubkupplung (150) angeordnet ist, um mit den schon beschleunigten Getriebeteilen die ruhenden Getriebeteile ruckartig in Bewegung zu versetzen,
- wobei das Drehspiel oder das Longitudinalspiel bei jedem Greif- und Lösevorgang vollständig zur Verfügung steht und
- wobei die Wellenkupplung (50) aus einer Antriebsscheibe (51) und einer Abtriebsscheibe (61) besteht, wobei beide Scheiben (51, 61) Kupplungselemente (52, 62, 63) haben, die sich bei jedem Drehrichtungswechsel erst nach einem Kupplungswinkel (60) von mindestens 10 Winkelgraden gegenseitig über ebene Flanken (54,55) und (64, 65) kontaktieren.

4. Antrieb gemäß Anspruch 3, **dadurch gekennzeichnet, dass** ein zweites Getriebe (260) von zwei Getrieben (230, 260) ein Schraubgetriebe ist, das aus einer Spindelmutter (265) und einem ein Spindelgewinde (262) aufweisenden Hubschlitten (261) besteht.

5. Antrieb gemäß Anspruch 4, **dadurch gekennzeichnet, dass** die Spindelmutter (265) als Teil des Getriebezugs ein Teil der Wellenkupplung (50) ist, der Bestandteil des motorfernen Teils des Getriebezugs ist.

6. Antrieb gemäß Anspruch 3, **dadurch gekennzeichnet, dass** ein erstes Getriebe (230) ein Planetengetriebe ist, bei dem das Sonnenrad (226) auf der Welle (222) des Elektromotors (221) angeordnet ist, der Steg (235) Teil der Kupplung (50) ist und das Hohlrad (231) ortsfest im Gehäuse (10, 280) sitzt.

7. Antrieb gemäß Anspruch 3, **dadurch gekennzeichnet, dass** die rotierenden Teile des motornahen Teils des Getriebezugs, der aus den Teilen (222, 225, 226, 235, 258) besteht, ein Massenträgheitsmoment um die Hauptmittellinie (3) haben, das kleiner ist als 60 Prozent des Massenträgheitsmoments des gesamten Getriebezuges aus den Teilen (222, 225, 226, 235, 258, 266).

8. Antrieb gemäß Anspruch 4, **dadurch gekennzeichnet, dass** die Spindelmutter (265) im Gehäuse (10, 280) zwischen zwei Axiallagern (272) eingespannt ist.

## Claims

1. A method for accelerating a gear train of a braking, clamping or gripping device with initially reduced mass moment of inertia,
- wherein, out of the rotating part of a drive motor and the downstream gearings (230, 260) acting on a lifting slide (261), the part of the gear train close to the motor can be accelerated before the part of this gear train remote from the motor,
- wherein the part of the gear train close to the motor is connected to the part of the gear train remote from the motor via a non-shiftable shaft coupling (50), which has rotational play, is based on a disc coupling and consists of an input disc (51) and an output disc (61), or via a thrust coupling (150) with longitudinal play, and
- wherein the rotational play or the longitudinal play is fully available during every gripping and releasing process in order to set the stationary gearing parts in motion rapidly together with the already accelerated gearing parts, and
- wherein, with a shaft coupling (50) with rotational play, on each change of direction, coupling elements (53) of the input disc (51) and coupling elements (62, 63) of the output disc (61) contact one another via flat flanks (54, 55) and (64, 65) only after a coupling angle (60) of at least 10 degrees.

2. The method according to Claim 1, **characterised in that** with a shaft coupling (50) with rotational play, the rotational play is between 10 and 350 degrees.

3. A drive for a braking, clamping or gripping device in which at least one electric motor (221) and at least two gearings (230, 260) are arranged in a housing (10, 280), wherein the electric motor (221) has an output member (222) that acts on a lifting slide (261) via the gearings (230, 260),
- wherein at least one shaft coupling (50), which has rotational play and is based on a disc coupling, or a thrust coupling (150) with longitudinal play is arranged between the output member (222) of the electric motor (221) and the lifting slide (261) in order to set the stationary gearing parts in motion rapidly together with the already accelerated gearing parts,
- wherein the rotational play or the longitudinal play is fully available during every gripping and releasing process, and
- wherein the shaft coupling (50) consists of an input disc (51) and an output disc (61), wherein both discs (51, 61) have coupling elements (52, 62, 63) that, on each change of direction, contact one another via flat flanks (54, 55) and (64, 65) only after a coupling angle (60) of at least 10 degrees.

4. The drive according to Claim 3, **characterised in that** a second gearing (260) of two gearings (230, 260) is a helical gearing consisting of a spindle nut (265) and a lifting slide (261) having a spindle thread (262).

5. The drive according to Claim 4, **characterised in that** the spindle nut (265) as a part of the gear train is a part of the shaft coupling (50) that is a component of the part of the gear train remote from the motor.

6. The drive according to Claim 3, **characterised in that** a first gearing (230) is a planetary gearing in which the sun gear (226) is arranged on the shaft (222) of the electric motor (221), the planet carrier (235) is part of the coupling (50), and the ring gear (231) is fixed in the housing (10, 280).

7. The drive according to Claim 3, **characterised in that** the rotating parts of the part of the gear train close to the motor and consisting of the parts (222, 225, 226, 235, 258) have a mass moment of inertia around the main centre line (3) that is less than 60 per cent of the mass moment of inertia of the entire gear train consisting of the parts (222, 225, 226, 235, 258, 266).

8. The drive according to Claim 4, **characterised in that** the spindle nut (265) is clamped in the housing (10, 280) between two axial bearings (272).

## Revendications

1. Procédé, destiné à accélérer un train d'engrenages d'un dispositif de freinage, de serrage ou de préhension avec un moment d'inertie réduit au début,
- la partie proche du moteur du train d'engrenages constituée de la partie en rotation d'un moteur d'entraînement et des engrenages (230, 260) montés en aval agissant sur un chariot de levage (261) pouvant être accélérée avant la partie éloignée du moteur dudit train d'engrenages,
- la partie proche du moteur du train d'engrenages étant assemblée avec la partie éloignée du moteur du train d'engrenages par l'intermédiaire d'un accouplement d'arbres (50) non commutable, soumis à un jeu en rotation, basé sur un accouplement à disques constitué d'une poulie menante (51) et d'une poulie menée (61) ou d'un accouplement coulissant (150) soumis à un jeu longitudinal et
- à chaque processus de préhension ou de relâchement, le jeu en rotation ou le jeu longitudinal étant disponible en totalité, pour placer en mouvement par saccades les parties d'engrenage au repos avec les parties d'engrenage déjà accélérées et
- sur un accouplement d'arbres (50) soumis à un jeu en rotation, à chaque changement de la direction de rotation, des éléments d'accouplement (53) de la poulie d'entrainement (51) et des éléments d'accouplement (62, 63) de la poulie entraînée (61) n'entrant en contact mutuel par l'intermédiaire de flancs plans (54, 55) et (64, 65), qu'après un angle d'accouplement (60) d'au moins 10 degrés angulaires.

2. Procédé selon la revendication 1, **caractérisé en ce que** sur un accouplement d'arbres (50) soumis à un jeu en rotation, le jeu en rotation se situe entre 10 et 350 degrés angulaires.

3. Entraînement, destiné à un dispositif de freinage, de serrage ou de préhension, sur lequel, dans un carter (10, 280) sont placés au moins un moteur électrique (221) et au moins deux engrenages (230, 260), le moteur électrique (221) disposant d'un organe mené (222), qui par l'intermédiaire des engrenages (230, 260), agit sur un chariot de levage (261),
- entre l'organe mené (222) du moteur électrique (221) et le chariot de levage (261) étant placé au moins un accouplement d'arbres (50) soumis à un jeu en rotation, basé sur un accouplement à disques ou un accouplement coulissant (150) soumis à un jeu longitudinal, pour placer en mouvement par saccades les parties d'engrenage au repos avec les parties d'engrenage déjà accélérées,
- le jeu en rotation ou le jeu longitudinal étant disponible en totalité à chaque processus de préhension et de relâchement,
- l'accouplement d'arbres (50) étant constitué d'une poulie menante (51) et d'une poulie menée (61), les deux poulies (51, 61) disposant d'éléments d'accouplement (52, 62, 63) qui à chaque changement de direction de rotation n'entrent en contact mutuel par l'intermédiaire de flancs plans (54, 55) et (64, 65), qu'après un angle d'accouplement (60) d'au moins 10 degrés angulaires.

4. Entraînement selon la revendication 3, **caractérisé en ce qu'**un deuxième engrenage (260) parmi deux engrenages (230, 260) est un engrenage hélicoïdal, qui est constitué d'un chariot de levage (261) comportant un écrou de broche (265) et un filetage de broche (262).

5. Entraînement selon la revendication 4, **caractérisé en ce qu'**en tant que partie du train d'engrenages, l'écrou de broche (265) est une partie de l'accouplement d'arbres (50), qui est un composant de la partie éloignée du moteur du train d'engrenages.

6. Entraînement selon la revendication 3, **caractérisé en ce qu'**un premier engrenage (230) est un engrenage planétaire, sur lequel la roue solaire (226) est placée sur l'arbre (222) du moteur électrique (221), l'entretoise (235) étant une partie de l'accouplement (50) et la roue creuse (231) étant assise de manière stationnaire dans le carter (10, 280).

7. Entraînement selon la revendication 3, **caractérisé en ce que** les pièces en rotation de la partie proche du moteur du train d'engrenages, qui est constitué des parties (222, 225, 226, 235, 258) disposent d'un moment d'inertie autour de la ligne médiane principale (3) qui est inférieur à 60 pourcent du moment d'inertie de l'ensemble du train d'engrenages constitué des parties (222, 225, 226, 235, 258, 266).

8. Entraînement selon la revendication 4, **caractérisé en ce que** l'écrou de broche (265) est enserré dans le carter (10, 280) entre deux paliers axiaux (272).
